**Europäisches Patentamt**

**European Patent Office**

**Office européen des brevets**

(19)

(11) Veröffentlichungsnummer: **0 038 014**
**B1**

(12) # EUROPÄISCHE PATENTSCHRIFT

(45) Veröffentlichungstag der Patentschrift:
06.07.83

(51) Int. Cl.³: **A 01 D 69/02**, A 01 D 53/08,
A 01 G 3/04

(21) Anmeldenummer: **81102624.4**

(22) Anmeldetag: **08.04.81**

(54) **Elektrogerät, insbesondere Gartengerät.**

(30) Priorität: **15.04.80 DE 8010197 U**

(43) Veröffentlichungstag der Anmeldung:
**21.10.81 Patentblatt 81/42**

(45) Bekanntmachung des Hinweises auf die Patenterteilung:
**06.07.83 Patentblatt 83/27**

(84) Benannte Vertragsstaaten:
**AT BE CH DE FR GB IT LI LU NL SE**

(56) Entgegenhaltungen:
**DE-A-1 782 773**
**DE-B-1 215 428**
**US-A-3 142 950**
**US-A-3 375 338**
**US-A-3 597 842**
**US-A-4 047 299**

(73) Patentinhaber: **GARDENA Kress + Kastner GmbH,
Lichernseestrasse 40, D-7900 Ulm/Donau (DE)**

(72) Erfinder: **Katzer, Johann, Nebenlhornweg 9,
D-7910 Neu-Ulm (DE)**
Erfinder: **Sauer, Roland, Gersterstrasse 41,
D-7900 Ulm-Gögglingen (DE)**
Erfinder: **Stephany, Christian, Biberacher Strasse 76,
D-7900 Ulm-Wiblingen (DE)**
Erfinder: **Lopic, Franz, Sperberweg 10,
D-7911 Nersingen (DE)**

(74) Vertreter: **Patentanwälte Ruff und Beier,
Neckarstrasse 50, D-7000 Stuttgart 1 (DE)**

## Elektrogerät, insbesondere Gartengerät

Die Erfindung betrifft ein Elektrogerät, insbesondere ein Gartengerät, bei dem der Stecker des Stromkabels zur Stromzuleitung nahe am Gerät angeordnet ist und an dem Geräteteil eine Halterung zur lösbaren Befestigung eines Abschnittes eines Verlängerungskabels angeordnet ist.

Derartige Gartengeräte, beispielsweise Elektro-Rasenmäher, Heckenscheren etc. benötigen normalerweise zu ihrem Betrieb ein Verlängerungskabel, das mit dem an einem nur kurzen Kabelstück aus dem Gerät oder seinem Griff hervorragenden Stromzuführungskabel verbunden wird (vgl. US-A-4 047 299 und US-A-3 375 338). Dabei tritt nun der Nachteil auf, daß das Lösen des Verlängerungskabels aus der Befestigung umständlich ist.

Aufgabe der Erfindung ist es, ein einfacheres Lösen des Verlängerungskabels aus seiner Befestigung am Elektrogerät zu ermöglichen.

Diese Aufgabe wird gemäß der Erfindung dadurch gelöst, daß die Halterung einen schwenkbar am Geräteteil gelagerten Schwenkkörper mit einem Einschnitt aufweist, daß durch den Einschnitt ein Abschnitt des Verlängerungskabels in einen Schlitz im Geräteteil von außen einführbar ist und daß der Schlitz bei verschwenktem Schwenkkörper durch diesen teilweise verdeckt ist.

Auf diese Weise wird das Verlängerungskabel leicht lösbar mechanisch mit dem Gerät verbunden, so daß Zugbeanspruchungen unmittelbar vom Verlängerungskabel auf das Geräteteil übergeleitet werden und die Steckverbindung zwischen Verlängerungskabel und Stromkabel keine wesentliche Zugbelastung mehr aufzunehmen hat. Ein weiterer Vorteil besteht darin, daß die Beweglichkeit der Steckkupplung auf einen Bereich nahe an dem Gerät beschränkt ist, so daß sie bei der Bewegung des Gerätes nicht hin- und her schlägt und stört.

Vorteilhaft ist eine Ausführung, bei der der Schwenkkörper im Bereich seines Einschnittes einen Führungskanal bildet, in dem das Verlängerungskabel in der Einführstellung und in der verschwenkten Sperrstellung im wesentlichen geradlinig verläuft. Dabei kann vorteilhaft der Schwenkkörper im verschwenkten Zustand den Schlitz überbrückende bzw. schließende Sperrabschnitte aufweisen, die vorzugsweise durch eine zumindest einseitig im Einschnittbereich hinterschnittene Ausbildung des Schwenkkörpers gebildet sind. Bei dieser Ausführung kann also das Verlängerungskabel, nachdem es im wesentlichen geradlinig in den Schlitz eingelegt wurde, in dieser Lage verbleiben und wird dadurch festgehalten, daß die Sperrabschnitte des Schwenkkörpers den Schlitz über dem Kabel verschließen. Bei dieser Ausführungsform bleibt das Verlängerungskabel ungeknickt und wird daher geschont. Durch die geradlinige Führung neigt der Schwenkkörper auch nicht dazu, sich unter Zugbelastung zu öffnen. Das Verlängerungskabel wird hier außer in dem Ausnahmefall, daß es genau den Dimensionen des Einschnittes entsprechende Außenabmessungen hat, nicht festgeklemmt. Das ist auch nicht erforderlich, weil sich am Ende des Verlängerungskabels, das hier festgelegt werden soll, die Steckkupplung befindet, die in jedem Falle größer ist als die entsprechenden Dimensionen des Schlitzes und des Einschnittes. Auf diese Weise wird also bei einer Zugbelastung die Steckkupplung des Verlängerungskabels bis an den Schlitz herangezogen, was sehr erwünscht ist, weil auf diese Weise die anderenfalls störende Kupplung sich automatisch dicht an das Gerät heranzieht.

Vorzugsweise kann der Schwenkkörper ein um seine Mittelachse flacher, im wesentlichen zylindrischer Körper sein, der im Mittelbereich des Schlitzes so gelagert ist, daß der in einer seiner Stirnflächen vorgesehene Einschnitt, der im wesentlichen dem Querschnitt des darin aufzunehmenden Verlängerungskabels entsprechende Abmessungen hat, zumindest teilweise mit dem Schlitz ausgerichtet werden kann, und daß der Schwenkkörper im Mantelbereich an den Einschnitt anschließende Ausnehmungen hat, die von als Teile der Stirnfläche des Schwenkkörpers ausgebildeten Sperrabschnitten übergriffen werden. Diese vorteilhafte Ausführung ermöglicht es, beispielsweise in einem Griff eines Gerätes den Schlitz vorzusehen und den Schwenkkörper als ein einfaches relativ flaches Kunststoffteil, dessen Höhe nicht wesentlich größer zu sein braucht als die Dicke des Verlängerungskabels, in diesem Griff zu lagern.

Vorteilhaft kann dabei der Schwenkkörper mindestens einen durch einen Durchbruch des Geräteteiles hervortretenden radialen Betätigungsansatz aufweisen, der in dem Durchbruch beispielsweise zwischen einer Offen- und einer Sperrstellung begrenzt bewegt werden kann.

Vorzugsweise kann das als Griff des Gerätes ausgebildete Geräteteil mit dem Gerät über einen Stiel mit diesem verbunden sein, der beispielsweise das Stromkabel aufnimmt und an dessen unteren Ende ein Befestigungsteil für das Gerät schwenkbar angeordnet ist, an dem ein Ende eines Zusatzlenkers angelenkt ist, dessen anderes Ende an einem vorzugsweise an einer beliebigen Stelle des Stiels feststellbaren Verbindungsstück angelenkt ist. Durch den Stiel und das Befestigungsteil kann ggf. das Stromkabel ungehindert verlaufen und der Zusatzlenker erleichtert die Bedienung des Gerätes.

Besonders vorteilhaft ist dabei, wenn das Verbindungsstück mit einem Handgriff ausgebildet und an dem Stiel durch Klemmung festlegbar ist. Es kann dazu ein Rohrstück aufweisen, das auf den Stiel aufschiebbar ist. Diese Anordnung ermöglicht es, jederzeit, also ggf.

auch während des Arbeitens des Gerätes, unterschiedliche Winkelstellungen zwischen Gerät und Stiel einzustellen. Das kann einerseits zur Anpassung an die unterschiedliche Größe von Bedienungspersonen erfolgen oder auch zur gewünschten Kippung des Gerätes in verschiedene Stellungen. Die Winkelstellung kann fixiert werden oder auch beweglich bleiben, so daß beispielsweise mit einer Gartenschere bewußt gegenüber der Horizontalen geneigte Schnitte ausgeführt werden können. Außerdem kann das Gerät durch den im Verbindungsstück vorgesehenen Handgriff mit beiden Händen gefaßt werden, so daß es leicht geführt und beispielsweise auch über Unebenheiten hinweggehoben werden kann. Läßt die Bedienungsperson diesen Handgriff los und klemmt sie das Verbindungsstück nicht am Stiel fest, so ist die Winkelstellung des Stiels frei und kann sich beliebig anpassen.

Es ergeben sich also drei Betriebsarten: Bei nicht festgelegtem Befestigungsstück und nicht angefaßtem Handgriff kann das Gerät beliebig geschoben werden, wobei sich der Stiel frei verschwenken läßt. Bei Anfassen des Handgriffes und des Stiels läßt sich das Gerät in seiner Neigung beliebig und während des Arbeitens kontinuierlich verändern und bei festgeklemmten Gleitstück ist der Stielwinkel festgelegt.

Ausführungsbeispiele der Erfindung sind in der Zeichnung dargestellt und werden im folgenden näher erläutert. Es zeigt

Fig. 1 Ein durch den Griff eines Stiels gebildetes Gehäuseteil eines Elektrogerätes mit einer Halterung für das Verlängerungskabel,

Fig. 2 eine Ansicht in Richtung des Pfeiles II in Fig. 1 ohne Verlängerungskabel,

Fig. 3 eine Ansicht entsprechend Fig. 2 mit festgelegtem Verlängerungskabel,

Fig. 4 eine Ansicht nach Richtung des Pfeiles IV in Fig. 2,

Fig. 5 u. 6 Detailansichten entsprechend Fig. 2 und 3 von einer zweiten Ausführungsform und Fig. 7 eine unterbrochen dargestellte teilgeschnittene Seitenansicht des zugehörigen Gerätestiels.

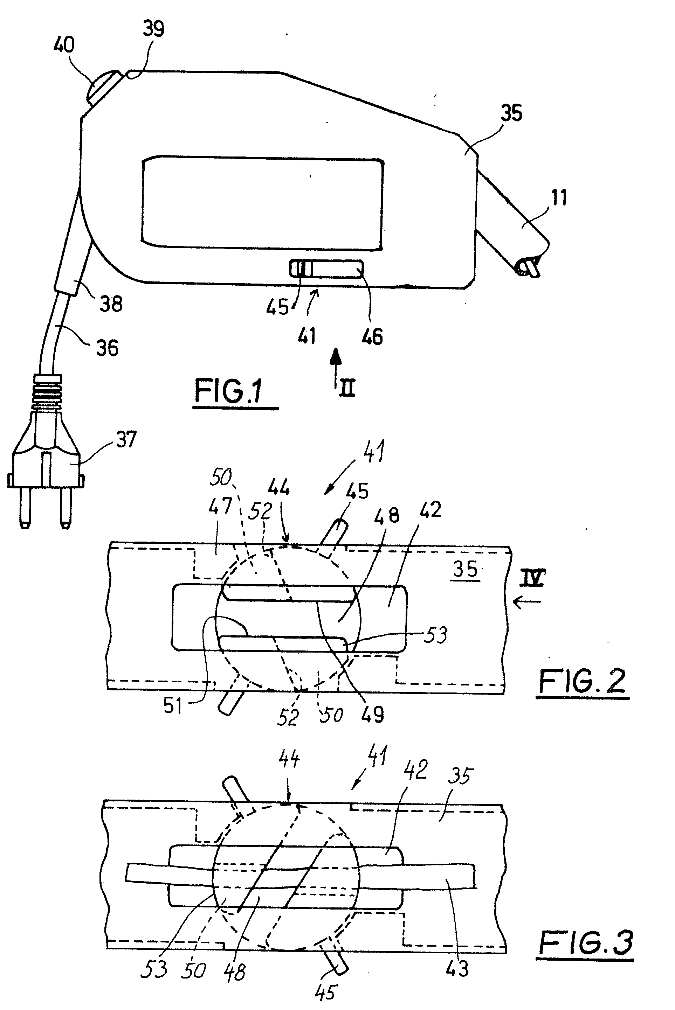

In Fig. 1 sind der Stiel 11 und der Handgriff 35 eines nicht dargestellten Gartengerätes gezeigt, das über den Erdboden geschoben werden kann, jedoch auch von diesem abhebbar ist. Es kann sich also beispielsweise um eine elektrische Grasschere, einen Fadenschneider o. dgl. handeln. Der Griff besteht aus zwei im wesentlichen spiegelbildlich ausgebildeten Halbschalen aus Kunststoff und hat die Form eines geschlossenen Rahmens. An der in Fig. 1 linken Seite des Griffes ist ein Stromkabel 36 aus dem Griff herausgeführt und besitzt an dieser Stelle eine das Abknicken des Kabels verhindernde Schutzverstärkung 38. Ein Verbindungsstecker 37 ist in relativ kurzem Abstand vom Griff angebracht, so daß nur ein kurzes Stück Stromkabel zwischen ihm und dem Griff 35 liegt.

An dem den Stiel 11 entgegengesetzten Ende des Griffes 35 befindet sich eine Abplattung 39, an der ein aus Gummi oder aus einem sonstigen stoßabsorbierenden Material bestehender Puffer 40 angebracht ist. Dies hat den besonderen Vorteil, daß bei Abstellen des Gerätes mit dem Griff 35 auf dem Boden eine Verschrammung oder Beschädigung des Griffes durch den Puffer 40, verhindert wird.

An der Unterseite des Griffes, d. h. in der unteren Seite des vom Griff gebildeten Rahmens, ist eine Halterung 41 zur Aufnahme eines oberen Abschnittes eines Verlängerungskabels 43 (Fig. 3) angeordnet. Diese ist im Detail in den Fig. 2 bis 4 dargestellt.

Die Unterseite des hohlen Griffes 35 besitzt einen Schlitz, und zwar beim dargestellten Ausführungsbeispiel einen Längsschlitz 42, der breiter ist als die Dicke des zu verwendenden Verlängerungskabels 43. In dem Griff 35 ist drehbar ein Schwenkkörper 44 gelagert, der eine kreiszylindrische Grundform geringer Höhe im Vergleich zum Durchmesser aufweist. Er besitzt zwei Betätigungsansätze 45, die radial nach außen abstehen und durch Durchbrüche 46 an den Seiten des unteren Rahmenteils des Griffs 35 nach außen ragen. Durch Lagerungsansätze, beispielsweise Vorsprünge 47 im Inneren des hohlen Griffes oder durch nicht dargestellte Achsstummel bzw. kreissegmentförmige Führungsflächen an Ober- und Unterseite des Schwenkkörpers 44, die mit entsprechenden Führungsflächen an dem Handgriff zusammenarbeiten, ist die Schwenkbarkeit gewährleistet.

Der Schwenkkörper 44 besitzt einen längs seines Durchmessers verlaufenden, nach der Unterseite hin offenen Einschnitt 48, dessen Abmessungen (Breite u. Tiefe) mindestens dem Durchmesser des Verlängerungskabels 43 entspricht. Die oben beschriebenen Lagerungsansätze können beispielsweise in einem kreiszylindrischen Ansatz des Schwenkkörpers 44 auf der Unterseite bestehen, der von dem Einschnitt 48 in zwei Hälften aufgeteilt wird, die mit entsprechenden Ausnehmungen auf beiden Seiten des Längsschlitzes 42 zusammenwirken.

Der Einschnitt 48 des Schwenkkörpers 44 fluchtet in der offenen Stellung der Halterung 41 mit dem Längsschlitz 42 und kann entweder schmaler oder gleich breit sein wie der Längsschlitz 42.

Der Einschnitt 48 bildet also einen Führungskanal des Verlängerungskabels in dem Schwenkkörper 44. Zu beiden Seiten dieses Kanales mit Seitenwänden 49 und 51 sind Erweiterungen dieses Kanals vorgesehen, d. h. der Einschnitt 48 hat an jedem seiner Ausgänge nach einer Seite hin eine Erweiterung, in deren Bereich auch der Mantel des zylinderförmigen Schwenkkörpers 44 unterbrochen ist. Lediglich die beiden Stirnflächen des Schwenkkörpers 44 sind in diesem Bereich nicht durchbrochen, so daß an der oberen Stirnfläche Sperrabschnitte 53 gebildet sind. Durch die beiden Erweiterungen 50 wird der nach unten hin offene, von dem Einschnitt 48 gebildete Führungskanal so erweitert, daß ein ebenfalls weitgehend geradliniger Führungskanal-Abschnitt gebildet wird, der von den beiden Seitenwänden 52 der Erweiterungen 50 begrenzt wird, den Einschnitt 48 unter einem Winkel zwischen 45° und 90° kreuzt, im wesentlichen die gleichen Querschnittsabmessungen wie der Einschnitt 48 hat und im Bereich der Erweiterungen von den Sperrabschnitten 53 überdeckt ist.

Im Betrieb wird das Verlängerungskabel in der Nähe seines dem Gartengerät zugewandten Endes (beim Ausführungsbeispiel das steckdosenartige Verbindungsteil) in den Längsschlitz 42 eingelegt, wenn sich der Schwenkkörper 44 in der Stellung nach Fig. 2 befindet, d. h. zum Längsschlitz 42 ausgerichtet ist. Das Verlängerungskabel 43 macht dabei eine leichte Biegung nach oben, d. h. in den Längsschlitz hinein. Der Längsschlitz kann wesentlich länger ausgebildet sein als dies in der Zeichnung dargestellt ist.

Danach wird der Schwenkkörper 44 in die in Fig. 3 dargestellte Lage geschwenkt. Dabei ändert sich an der Lage des Verlängerungskabels 43 nichts. Die Enden des Einschnitts 48 werden jedoch von Rahmenteilen überdeckt und die Sperrabschnitte 53 überdecken den Längsschlitz 42 und schließen ihn nach oben ab. Das Verlängerungskabel 43 kann sich nun, wenn seine Abmessungen geringer sind als die des vom Einschnitt 48 und den Erweiterungen 50 gebildeten Führungskanals, immer noch in Längsrichtung bewegen, bis sich sein Kupplungsstück, in das der Stecker 37 eingesteckt werden kann, dicht an die eine Seite des Längsschlitzes 42 herangezogen hat und dort die weitere Bewegung des Verlängerungskabels sperrt. Falls es erwünscht wäre, das Verlängerungskabel 43 selbst festzuklemmen, so könnte der Führungskanal im Bereich der Erweiterungen 50 in seinen Höhenabmessungen verjüngt sein, so daß das Verlängerungskabel dort festgeklemmt wird. Dies ist jedoch normalerweise nicht nötig.

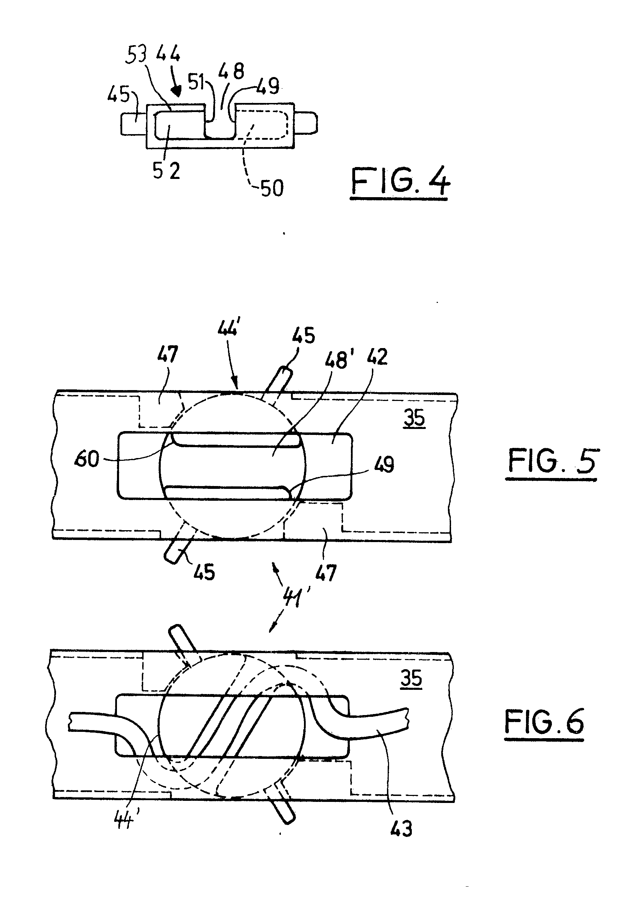

In den Fig. 5 und 6 ist ein weiteres Ausführungsbeispiel einer Halterung 41' dargestellt, bei der gleiche Teile gleiche Bezugszeichen tragen und nicht nochmals erläutert werden. Der Schwenkkörper 44' besitzt einen Einschnitt 48', der geradlinig verläuft und keine von Sperrabschnitten überdeckte seitliche Erweiterung hat. Seine Ecken 59, 60 sind abgerundet. In ihnen wird das Verlängerungskabel 43 geradlinig (mit einer leichten Biegung nach oben) eingelegt, wenn sich der Schwenkkörper in der Stellung nach Fig. 5 befindet. Beim Verschwenken in die Lage der Fig. 6 wird das Verlängerungskabel 43 S-förmig gekrümmt, so daß das Verlängerungskabel 43 von Teilen des Handgriffs 35 überdeckt wird, weil der Längsschlitz 42 im Rahmen wesentlich schmaler ist als der Durchmesser des Schwenkkörpers 44. In diesem Falle werden also die Sperrabschnitte 53 durch Rahmenteile ersetzt. Bei dieser Ausführungsform kann allerdings ein stärkerer Zug des Verlängerungskabels den Schwenkkörper selbsttätig zurückdrehen. Daher ist auch eine umgekehrte Ausführung möglich, bei der der Schlitz beispielsweise schräg im Handgriff 35 angeordnet ist, so daß das Kabel in leicht S-förmiger Krümmung eingelegt wird und dann beim Verschwenken des Schwenkkörpers eine gerade Position einnimmt. Der Schwenkkörper hätte dabei keinen Einfluß auf die eigentliche Haltefunktion, würde jedoch zur Erleichterung des Entnehmens des Kabels dienen.

Von der dargestellten und beschriebenen Ausführungsform sind zahlreiche Abwandlungen im Rahmen der Erfindung möglich. So kann es vorteilhaft sein, wenn der Längsschlitz 42 genauso breit ist, wie der Einschnitt 48, um das Einlegen zu erleichtern und das Kabel sicher zu führen. Statt eines drehbaren Schwenkkörpers 44 könnte auch ein Halterungsschieber verwendet werden. Beim Ausführungsbeispiel ist die Halterung im Handgriff 35 an einem Stiel angebracht, weil dort der Kabelausgang möglichst weit vom Gartengerät entfernt hoch genug angebracht ist. Es ist jedoch auch möglich, die Halterung direkt am Gerät anzuordnen.

Auf das untere Ende des Stieles 11 ist die eine Hälfte 12 eines Befestigungsteiles 13 aufgeschoben und mit Hilfe eines Zapfens 14 verbunden. Die zweite Hälfte 15 des Befestigungsteiles 13 weist an ihrem in Fig. 1 am rechten Ende ebenfalls eine zylinderförmige Ausnehmung 16 auf, in die ein zylinderförmiges Rohrstück 17 eingesetzt ist. Dieses Rohrstück 17 ist mit dem zu bedienenden Gartengerät verbunden. Durch das Innere des Stieles 11, die beiden Hälften 12 und 15 des Befestigungsteiles 13 und das Rohrstück 17 erstreckt sich das Stromkabel 18, das in dem hier dargestellten Beispiel das elektrisch betriebene Gartengerät mit Strom versorgen soll. Die beiden Hälften 12 und 15 des Befestigungsteiles 13 sind mit Hilfe eines horizontal verlaufenden Schwenkzapfens 19 miteinander verbunden. Die dem Stiel 11 zugehörende Hälfte 12 besitzt zwei einen Teil eines Kreiszylinders bildende Führungsflächen 20. Die dem Gerät zugehörende Hälfte 15 besitzt ebenfalls zwei kreiszylinderförmige Flächen 21, die außerhalb der Führungsflächen 20 angeordnet sind und dicht an diesen anliegen. Mit Hilfe dieser beiden Paare von Führungsflächen wird eine exakte Verschwenkung der beiden Hälften des Befestigungsteiles 13 um die durch den Schwenkzapfen 19 gebildete etwa horizontal verlaufende Achse ermöglicht.

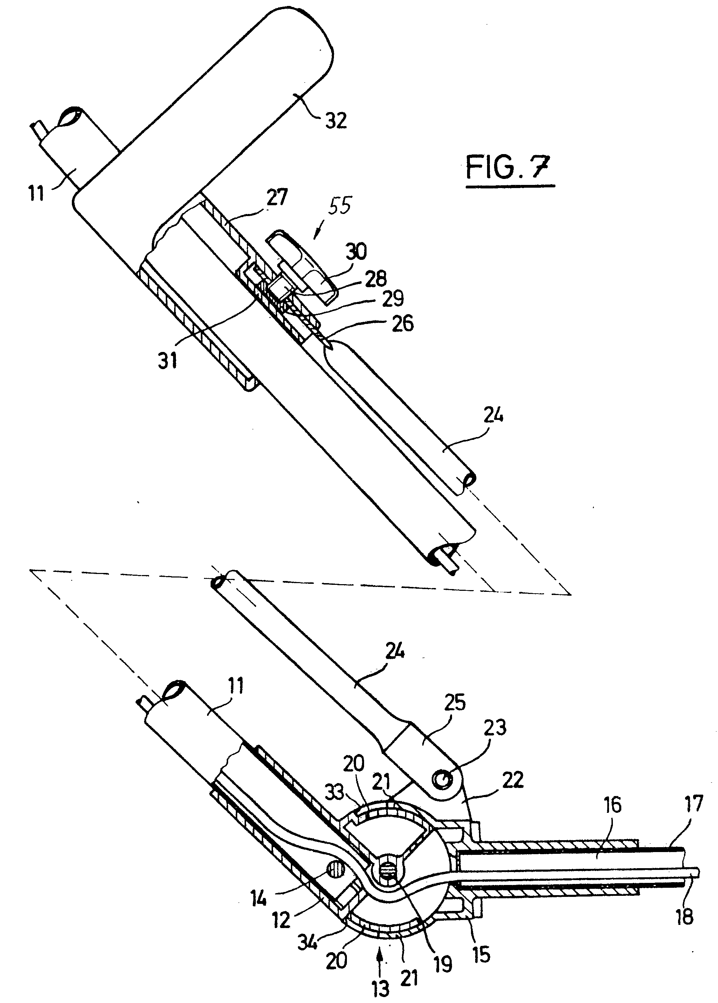

Die dem Gartengerät zugehörende Hälfte 15 des Befestigungsteiles 13 besitzt einen nach oben vorstehenden Ansatz 22, der eine Querbohrung und einen darin angeordneten, etwa horizontal und damit parallel zum Schwenkzapfen 19 verlaufenden Zapfen 23 aufweist. An dem Ansatz 22 ist mit Hilfe des Zapfens 23 das untere Ende eines Zusatzlenkers 24 schwenkbar angelenkt. Dieser Zusatzlenker 24 besteht aus einem Rohr, das in seinem unteren Bereich 25 flach zusammengepreßt ist. Das obere Ende des Zusatzlenkers 24, siehe Fig. 7, ist ebenfalls flach zusammengepreßt und bildet einen flachen Abschnitt 26, wobei die Ebenen der Abschnitte 26 und 25 in Richtung der Längsachse gesehen um 90° gegeneinander versetzt angeordnet sind. Der obere Abschnitt 26 des Zusatzlenkers 24 ist mit einem Loch und einer daran festgepreßten Mutter 29 versehen, in deren Gewinde eine Schraube 28 eingeschraubt ist, die außerdem ein Loch in einem Rohrstück 27 durchquert, das zu einem auf dem Stiel 11 geführten Verbindungsstück 55 gehört. Damit ist das obere Ende des Zusatzlenkers 24 mit dem Rohrstück 27 verbunden. Die Schraube besitzt einen relativ großen, griffig ausgebildeten Schraubenkopf 30, mit dessen Hilfe sie leicht eingeschraubt werden kann. Wird die Schraube 28 weiter nach innen geschraubt, so drückt ihr vorderes Ende auf einen Abschnitt 31 an der Innenseite des Rohrstückes 27 und verklemmt dabei diesen Abschnitt 31 und damit das Rohrstück 27 gegenüber dem Stiel 11.

An dem Rohrstück 27 des Verbindungsstückes 55 ist in dessen oberen Bereich ein etwa rechtwinklig abstehender Handgriff 32 angeordnet. Dabei kann es sich um einen geschlossenen Handgriff handeln, dessen Öffnung in Richtung des Stieles 11 verläuft und daher aus Fig. 7 nicht ersichtlich ist.

Durch Verschieben des Handgriffes 32 gegenüber dem Stiel 11 wird die dem Gerät zugewandte Hälfte 15 des Befestigungsteiles 13 um den Zapfen 19 verschwenkt, wobei gleichzeitig das Gerät selbst mitverschwenkt wird. Die Verschwenkungsbewegung wird dadurch begrenzt, daß die in Fig. 1 linke Kante des oberen Teils der Führungsfläche 21 bei der Linksdrehung an der Stufe 33 in der Führungsfläche 20 anstößt. Die Verschwenkung im Uhrzeigersinn wird dadurch begrenzt, daß entsprechend die linke Kante des unteren Teils der Führungsfläche 21 an der Kante 34 anstößt.

Dadurch ergeben sich die bereits erwähnten drei Betriebsarten: Wenn der Bedienende bei gelöster Schraube 28 nur an dem den Stiel 11 an seinem äußeren Ende abschließenden Handgriff 35 anfaßt, so ist das Gerät am Stiel 11 frei beweglich befestigt und kann sich dem Boden beliebig anpassen, ebenso wie der Größe des Benutzers. Wird bei gelöster Schraube 28 der Handgriff 32 zusätzlich angefaßt, so kann die Neigung des Gerätes durch Verschiebung der beiden Handgriffe 32, 35 gegeneinander in seiner Neigung beliebig geändert werden, beispielsweise um mit einem Schneidgerät schräge Schnitte auszuführen. In diesem Falle bilden also die beiden Handgriffe eine Fernsteuerungsmöglichkeit für das Gerät, ohne daß der Bedienende beispielsweise in die Hocke gehen müßte, um das Gerät aufwärts zu schwenken. Es bleibt nach wie vor seiner Größe angepaßt. Durch Festziehen der Schraube 28 wird der Stiel in der jeweiligen Winkelstellung blockiert und auf diese Weise kann also eine einmalige Einstellung des Schnittwinkels und/oder eine Anpassung an die Größe oder bequemste Haltung des Bedienenden erreicht werden.

**Patentansprüche**

1. Elektrogerät, insbesondere Gartengerät, bei dem der Verbindungsstecker (37) des Stromkabels (36) zur Stromzuleitung nahe einem Geräteteil angeordnet ist und an dem Geräteteil eine Halterung (41, 41') zur lösbaren Befestigung eines Abschnittes eines Verlängerungskabels (43) angeordnet ist, dadurch gekennzeichnet, daß die Halterung (41, 41') einen schwenkbar am Geräteteil gelagerten Schwenkkörper (44, 44') mit einem Einschnitt (48, 48') aufweist, daß durch den Einschnitt (48, 48') ein Abschnitt des Verlängerungskabels (43) in einen Schlitz (42) im Geräteteil von außen einführbar ist und daß der Schlitz (42) bei verschwenktem Schwenkkörper (44, 44') durch diesen teilweise verdeckt ist.

2. Elektrogerät nach Anspruch 1, dadurch gekennzeichnet, daß der Schwenkkörper (44) im Bereich seines Einschnittes (48) einen Führungskanal bildet, in dem das Verlängerungskabel (43) in der Einführstellung und in der verschwenkten Sperrstellung im wesentlichen geradlinig verläuft.

3. Elektrogerät nach einem der vorhergehenden Ansprüche, dadurch gekennzeichnet, daß der Schwenkkörper (44) im verschwenkten Zustand den Schlitz (42) überbrückende bzw. schließende Sperrabschnitte (53) aufweist, die vorzugsweise durch eine zumindest einseitig im Einschnittsbereich hinterschnittene Ausbildung des Schwenkkörpers (44) gebildet sind.

4. Elektrogerät nach einem der vorhergehenden Ansprüche, dadurch gekennzeichnet, daß der Schwenkkörper (44) ein um seine Mittelachse schwenkbarer, flacher, im wesentlichen zylindrischer Körper ist, der im Mittelbereich des Schlitzes (42) so gelagert ist, daß der in einer seiner Stirnflächen vorgesehene Einschnitt (48), der wenigstens dem Querschnitt des darin aufzunehmenden Verlängerungskabels (43) entsprechende Abmessungen hat und zumindest teilweise mit dem Schlitz (42) ausgerichtet werden kann, und daß der Schwenkkörper (44) in seinem Mantelbereich an den Einschnitt (48) anschließende Erweiterungen (50) hat, die von als Teile der Stirnfläche des Schwenkkörpers (44) ausgebildeten Sperrabschnitten (53) übergriffen werden.

5. Elektrogerät nach einem der vorhergehenden Ansprüche, dadurch gekennzeichnet, daß der Schwenkkörper (44, 44') mindestens einen durch einen Durchbruch (46) des Geräteteils vortretenden radialen Betätigungsansatz (45) aufweist.

6. Elektrogerät nach einem der vorhergehenden Ansprüche, dadurch gekennzeichnet, daß das als Handgriff (35) des Gerätes ausgebildete Geräteteil mit dem Gerät über einen Stiel (11) verbunden ist, an dessen unterem Ende ein Befestigungsteil (13) für das Gerät schwenkbar angeordnet ist, an dem ein Ende eines Zusatzlenkers (24) angelenkt ist, dessen anderes Ende an einem vorzugsweise an einer beliebigen Stelle des Stiels (11) feststellbaren Verbindungsstück (55) angelenkt ist.

7. Elektrogerät nach Anspruch 6, dadurch gekennzeichnet, daß das Verbindungsstück (55) als auf dem Stiel (11) entlanggleitende Gleitstück mit einem Handgriff (32) ausgebildet und an dem Stiel (11) durch Klemmung festlegbar ist.

8. Elektrogerät nach Anspruch 7, dadurch gekennzeichnet, daß das Verbindungsstück (55) ein Rohrstück (27) aufweist, das auf den Stiel (11) aufschiebbar ist.

## Claims

1. An electrical apparatus, more particularly a garden apparatus, wherein the pin connector (37) of the power cable (36) for supplying power is disposed adjacent a part of the apparatus, and disposed on the part of the apparatus is a retaining means (41, 41') for the releasable attachment of a portion of an extension cable (43), characterized in that the retaining means (41, 41') has a pivoting member (44, 44') pivotably mounted on the apparatus part and having an incision (48, 48'); the portion of the extension cable (43) can be introduced through the incision (48, 48') from outside into a slot (42) in the apparatus part; and the slot (42) is partially covered by the pivoting member (44, 44') when the same is pivoted.

2. An electrical apparatus, according to Claim 1, characterized in that the pivoting member (44) forms in the zone of its incision (48) a guide channel in which the extension cable (43) extends substantially rectilinearly in the introduction position and in the pivoted locking position.

3. An electrical apparatus, according to one of the preceding Claims, characterized in that the pivoting member (44) has in pivoted condition locking portions (53) which bridge and close the slot (42) and which are preferably formed by a formation of the pivoting member (44) which is undercut on at least one side.

4. An electrical apparatus according to one of the preceding claims, characterized in that the pivoting member (44) is a flat, substantially cylindrical member which can be povited around its central axis and which is so mounted in the central zone of the slot (42) that the incision (48) provided in one of its end faces, which has dimensions corresponding at least to the cross-section of the extension cable (43) received therein, can be aligned at least partially with the slot (42), the generated surface of the pivoting member (44) having widened portions (50) which adjoin the incision (48) and are engaged over by locking portions (53) formed as parts of the end face of the pivoting member (44).

5. An electrical apparatus according to one of the preceding claims, characterised in that the pivoting member (44, 44') has at least one radial actuating attachment (45) which projects through an opening (46) in the apparatus part.

6. An electrical apparatus according to one of the preceding claims, characterized in that the apparatus part formed as an apparatus handle (35) is connected to the apparatus via a stem (11) at whose lower end an attaching part (13) for the apparatus is pivotably disposed, to which one end of an additional guide rod (24) is articulated, whose other end is articulated to a connecting member (55) which can preferably be locked in position at any desired place on the stem (11).

7. An electrical apparatus according to Claim 6, characterized in that the connecting member (55) is constructed in the form of a sliding member which slides along the stem (11) and has a handle (32) and can be locked in position on the stem (11) by jamming.

8. An electrical apparatus according to Claim 7, characterised in that the connecting member (55) has a tubular member (27) which can be slipped on to the stem (11).

## Revendications

1. Appareil électrique, notamment outil de jardinage, dans lequel la fiche de raccordement (37) du câble électrique (36) pour l'alimentation en courant se trouve à proximité d'une partie de l'appareil et un support (41, 41') pour la fixation amovible d'un tronçon de câble de prolongement (43) est placé sur cette partie de l'appareil, caractérisé par le fait que le support (41, 41') présente un organe pivotant (44, 44') comportant un évidement (48, 48') et monté pivotant sur la partie de l'appareil; par le fait que, par l'évidement (48, 48'), un tronçon du câble de prolongement (43) peut être introduit de l'extérieur dans une fente (42) de la partie de l'appareil; et par le fait que la fente (42) est partiellement obturée par cet organe pivotant (44, 44') lorsqu'il a pivoté.

2. Appareil électrique selon la revendication 1, caractérisé par le fait que l'organe pivotant (44) forme, dans la région de son évidement (48), un canal de guidage dans lequel le câble de prolongement (43) s'étend pour l'essentiel rectilignement dans la position d'introduction et dans la position de blocage après pivotement.

3. Appareil électrique selon l'une des revendications précédentes, caractérisé par le fait que l'organe pivotant (44) comporte des tronçons de blocage (53) chevauchant ou obturant la fente (42) après pivotement, qui sont formés de préférence par une découpe de l'organe pivotant (44) pratiquée au moins d'un côté dans la zone de l'évidement.

4. Appareil électrique selon l'une des revendications précédentes, caractérisé par le fait que l'organe pivotant (44) est un organe, essentiellement cylindrique, plat et pivotant autor de son axe médian, qui est monté dans la région médiane de la fente (42) de telle manière que l'évidement (48), prévu dans l'une de ses faces extrêmes et de dimensions correspondant au moins à la section transversale du câble de prolongement (43) qui doit y être reçu, puisse être aligné au moins partiellement avec la fente (42); et par le fait que cet organe pivotant (44) comporte dans sa zone périphérique des élargissements (50) contigus à l'évidement (48), qui sont chevauchés par des tronçons de blocage (53) réalisés comme des parties de la face extrême de l'organe pivotant (44).

5. Appareil électrique selon l'une des revendications précédentes, caractérisé par le fait que l'organe pivotant (44, 44') présente au moins un téton radial d'actionnement (45) qui fait saillie par un orifice (46) de la partie de l'appareil.

6. Appareil électrique selon l'une des revendications précédentes, caractérisé par le fait que la partie de l'appareil conformée en poignée (35) est reliée à l'appareil par un manche (11) à l'extrémité inférieure duquel est monté pivotant un élément de fixation (13) pour l'appareil, sur lequel est articulée une extrémité d'un bras pivotant supplémentaire (24) dont l'autre extrémité est articulée sur un organe de liaison (55) pouvant être fixé, de préférence, à n'importe quel endroit du manche (11).

7. Appareil électrique selon la revendication 6, caractérisé par le fait que l'organe de liaison (55) est réalisé sous la forme d'un organe coulissant le long du mache (11) et muni d'une poignée (32), et peut être assujetti au manche (11) par coincement.

8. Appareil électrique selon la revendication 7, caractérisé par le fait que l'organe de liaison (55) comporte une pièce tubulaire (27) qui peut être enfilée sur le manche (11).

39

40

35

11

38

36

45 41 46

37

## FIG.1

II

41

50
47 52 44 45 48 42

35

IV

53

51 52 50 49

## FIG.2

44 41 42 35

53 50 48

45

43

## FIG.3

FIG. 4

FIG. 5

FIG. 6

FIG. 7